# EUROPÄISCHE PATENTSCHRIFT

(11) **EP 3 019 295 B1**
(45) Veröffentlichungstag und Bekanntmachung des Hinweises auf die Patenterteilung: **07.08.2019**
(21) Anmeldenummer: 13805242.8
(22) Anmeldetag: 28.10.2013
(51) Int. Cl.: B23H 9/16, B23H 3/04

(54) **ELEKTRODE ZUR BEARBEITUNG VON AUSNEHMUNGEN IN BOHRUNGEN GERINGEN DURCHMESSERS**
ELECTRODE FOR PROCESSING RECESSES IN DRILL HOLES OF SMALL DIAMETER
ÉLECTRODE POUR L'USINAGE DE CREUX DANS DES PERÇAGES DE PETIT DIAMÈTRE

(30) Priorität: 29.11.2012 DE 102012023374
(43) Veröffentlichungstag der Anmeldung: 18.05.2016
(73) Patentinhaber: EMAG Holding GmbH, 73084 Salach (DE)
(72) Erfinder: ROTHAMMEL, Walter, 74594 Kreßberg (DE); GMELIN, Walter, Thomas, 71032 Böblingen (DE)
(86) Internationale Anmeldenummer: PCT/DE2013/000642
(87) Internationale Veröffentlichungsnummer: WO 2014/082614

(56) Entgegenhaltungen:
- DE-A1- 19 929 023
- DE-A1-102006 025 456
- DE-A1-102011 100 174
- US-A- 3 354 073
- US-A1- 2003 006 137

## Beschreibung

Die Erfindung betrifft eine Elektrode zur elektrochemischen Bearbeitung von Ausnehmungen in Bohrungen geringen Durchmessers.

Eine derartige Elektrode ist aus der DE 199 29 023 A1 bekannt. Diese zeigt einen Elektrodengrundkörper mit einer elektrisch isolierenden Schutzhülse. Durch Verwendung einer Keramikkappe und einer Keramikhülse ist eine hohe mechanische und thermische Stabilität gegeben,

Die DE 10 2006 025456 A1 offenbart eine Elektrode zur elektrochemischen Bearbeitung von Ausnehmungen in Bohrungen geringen Durchmessers gemäß dem Oberbegriff des Anspruchs 1 mit einem Elektrodengrundkörper und einem sich daran anschließenden Bearbeitungskopf, wobei der Elektrodengrundkörper an der Außenseite mit einer Isolierschicht versehen ist und wobei der Bearbeitungskopf einen aktiven Kathodenbereich bildet. Dazu weist der Bearbeitungskopf eine konusartige Erweiterung auf, deren Abmessungen auf der einen Seite an den Elektrodengrundkörper und auf der gegenüberliegenden Seite an die Geometrie der zu erzeugenden Ausnehmung angepasst sind.

Es ist die Aufgabe der vorliegenden Erfindung eine Elektrode nach dem Oberbegriff des Patentanspruchs 1 mit verbesserten Strömungsverhältnissen aufzuzeigen.

Diese Aufgabe wird gelöst mit einer Elektrode nach Patentanspruch 1. Vorteilhafte Ausgestaltungen sind Gegenstand der Unteransprüche. Beim elektrochemischen Bohren oder Anbringen von Ausnehmungen In Bohrungen ist eine Elektrode mit rohrförmigem Elektrodengrundkörper außen mit einer Isolierschicht versehen, um die elektrische Leitfähigkeit auf die Spitze der Elektrode zu begrenzen. Durch die spezielle Geometrie eines Bearbeitungskopfes am Ende des Elektrodengrundköpers können das elektrische Feld und der Elektrolytfluss so beeinflusst werden, dass die Ausnehmung, beispielsweise ein Ringraum, mit der gewünschten Geometrie durch elektrochemische Bearbeitung hergestellt werden kann. Die Herstellung von Elektroden mit einem Durchmesser in der Größenordnung von ca. drei Millimetern ist sehr aufwendig. Die Kathoden werden in Einzelschritten hergestellt. Dabei werden die Einzelteile durch Löt- und Umformprozesse miteinander verbunden. Der Elektrodengrundkörper wird mit einer Dünnschicht-Beschichtung isoliert. Zur Zentrierung der Elektrode innerhalb der Werkstückbohrung sind Zentrierhülsen vorgesehen. Nach Einführen der Elektrode in die Werkstückbohrung wird die Ausnehmung durch Beaufschlagung mit Gleich- oder Pulsstrom unter Anlegen von Spannungsverläufen, durch Versetzen der Elektrode während oder zwischen den Prozessschritten und bei Bedarf durch Umkehren der Elektrolytflussrichtung erzeugt.

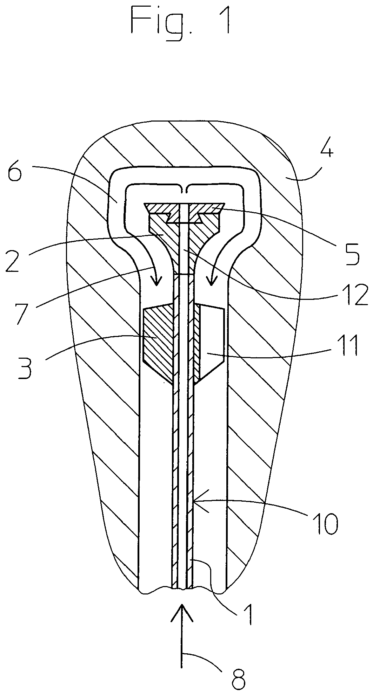

Im Folgenden wird die Erfindung anhand eines Ausführungsbeispiels näher erläutert. Die einzige Fig. 1 zeigt ein Werkstück 4 mit einer Bohrung 5. An einem an der Oberfläche mit einer Isolierschicht 10 versehenen Elektrodengrundkörper 1 ist an einem Ende ein Bearbeitungskopf 2 aufgesetzt. Dessen Außendurchmesser ist an einer Seite an den Durchmesser des Elektrodengrundkörpers 1 angepasst und nimmt zur gegenüberliegenden Seite hin zu. Den Abschluss der Elektrode bildet die Isolierkappe 5. Der Bearbeitungskopf 2 und die Isolierkappe 5 weisen eine Durchgangsbohrung 12 auf. Der Elektrolytfluss führt vom Elektrolytzulauf 8 durch den Elektrodengrundkörper 1 und die sich daran anschließende Durchgangsbohrung 12 hindurch. Der Strömungsrichtung 7 folgend wird der Elektrolytfluss umgeleitet und an der Außenseite des Bearbeitungskörpers 2 vorbeigeführt, so dass die gewünschte Ausnehmung 6 entsteht. Bei einer Tiefe der Bohrung 5 von bis zu 100 Millimetern besteht die Gefahr, dass der Elektrodengrundkörper 1 verbogen wird. Deshalb sind Distanzhülsen 3 vorgesehen, welche dieses verhindern. Die Distanzhülsen 3 weisen Öffnungen 11 auf, durch die der Elektrolytfluss hindurchfließen kann.

### Bezugszeichenliste

- 1: Elektrodengrundkörper
- 2: Bearbeitungskopf
- 3: Distanzhülse
- 4: Werkstück
- 5: Isolierkappe
- 6: Ausnehmung
- 7: Strömungsrichtung
- 8: Elektrolytzulauf
- 9: Bohrung
- 10: Isolierschicht
- 11: Öffnung
- 12: Durchgangsbohrung

## Patentansprüche

1. Elektrode zur elektrochemischen Bearbeitung von Ausnehmungen (6) in Bohrungen (9) geringen Durchmessers mit einem Elektrodengrundkörper (1) und einem sich daran anschließenden Bearbeitungskopf (2), wobei der Elektrodengrundkörper (1) an der Außenseite mit einer Isolierschicht (10) versehen ist und wobei der Bearbeitungskopf (2) einen aktiven Kathodenbereich bildet, wobei der Bearbeitungskopf (2) eine konusartige Erweiterung aufweist, deren Außendurchmesser an ihrer zum Elektrodengrundkörper (1) weisenden Seite dem Durchmesser des Elektrodenkörpers entspricht und auf der gegenüberliegenden Seite an die Geometrie der zu erzeugenden Ausnehmung (6) angepasst ist, **dadurch gekennzeichnet,**
**dass** am Bearbeitungskopf (2) auf der dem Elektrodengrundkörper (1) abgewandten Seite eine Isolierkappe (5) angeordnet ist und dass der Bearbeitungskopf (2) und die Isolierkappe (5) eine Durchgangsbohrung (12) aufweisen.

2. Elektrode nach Patentanspruch 1, **dadurch gekennzeichnet, dass** auf dem Elektrodengrundkörper (1) mindestens eine Distanzhülse (3) vorgesehen ist.

## Claims

1. Electrode for the electrochemical machining of recesses (6) in holes (9) of smaller diameter with an electrode base body (1) and an adjoining machining head (2), wherein the electrode base body (1) has on the outside an insulating layer (10) and wherein the machining head (2) forms an active cathode region, wherein the machining head (2) has a conical extension whose outer diameter corresponds to the diameter of the electrode body on the side facing the electrode base body (1) and on the opposite side it is adapted to the geometry of the to be generated recess (6), **characterized in that** on the machining head (2) an insulating cap (5) is arranged on the side facing away from the electrode base body (1), and that the machining head (2) and the insulating cap (5) have a through bore (12).

2. Electrode according to Patent Claim 1, **characterized in that** on the electrode base body (1) at least one spacer sleeve (3) is provided.

## Revendications

1. Electrode pour l'usinage électrochimique d'évidements (6) dans des trous (9) de plus petit diamètre avec un corps de base d'électrode (1) et une tête d'usinage adjacente (2), le corps de base d'électrode (1) présentant à l'extérieur une couche isolante (10) et dans laquelle la tête d'usinage (2) forme une région de cathode active, dans laquelle la tête d'usinage (2) a une extension conique dont le diamètre extérieur correspond au diamètre du corps d'électrode du côté faisant face au corps de base d'électrode (1) et adapté du côté opposé à la géométrie de l'évidement à générer (6),
**caractérisé**
**en ce que** sur la tête d'usinage (2), un capuchon isolant (5) est disposé sur le côté opposé à la base d'électrode corps (1), et que la tête d'usinage (2) et le capuchon isolant (5) présentent un alésage traversant (12).

2. Electrode selon la revendication 1, **caractérisée en ce que** sur le corps de base d'électrode (1) est prévue au moins une douille entretoise (3).
